# EUROPEAN PATENT SPECIFICATION

(11) **EP 4 440 051 B1**
(45) Date of publication and mention of the grant of the patent: **29.07.2026**
(21) Application number: 24167118.9
(22) Date of filing: 28.03.2024
(51) Int. Cl.: H04L 12/403

(54) **SINGLE WIRE SERIAL COMMUNICATION METHOD AND SINGLE WIRE SERIAL COMMUNICATION APPARATUS**
SERIELLES EINZELDRAHT-KOMMUNIKATIONSVERFAHREN UND SERIELLE EINZELDRAHT-KOMMUNIKATIONSVORRICHTUNG
PROCÉDÉ DE COMMUNICATION EN SÉRIE À FIL UNIQUE ET APPAREIL DE COMMUNICATION EN SÉRIE À FIL UNIQUE

(30) Priority: 31.03.2023 CN 202310345328
(43) Date of publication of application: 02.10.2024
(73) Proprietor: Silergy Semiconductor Technology (Hangzhou) Ltd, Zhejiang 310051 (CN)
(72) Inventor: YANG, Yuanyu, Hangzhou City, Zhejiang Province, 310051 (CN); XU, Xiaoqiang, Hangzhou City, Zhejiang Province, 310051 (CN); WANG, Jianxin, Hangzhou City, Zhejiang Province, 310051 (CN)
(74) Representative: Viering, Jentschura & Partner mbB Patent- und Rechtsanwälte

(56) References cited:
- EP-A1- 4 102 777
- EP-A2- 1 434 058
- US-A1- 2013 124 763

## Description

### Field of the invention

The present invention relates to a technical field of communication, and particularly relates to a single wire serial communication method and single wire serial communication system.

### Background of the invention

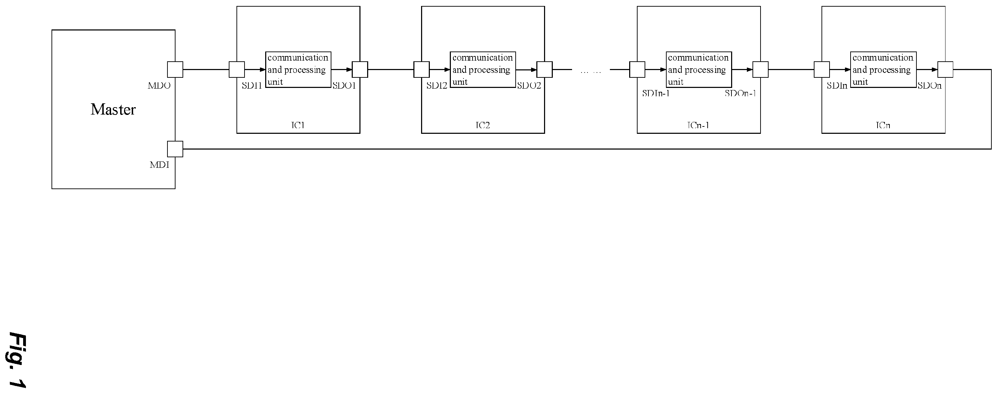

Single wire cascade communication of conventional technology would be described as follows. As shown in FIG. 1, IC1 to ICn are equal apparatus, and a master device and slave devices IC1 to ICn form a communication link. In order to distinguish slave devices serial connected on different positions of the communication link, address initialization requires performing on the slave devices. In the conventional technology, after the master device transmits an address initialization command and the slave device IC1 stores the received device address, the slave device IC1 adds 1 to the value of its received device address and transmits the added device address to slave device IC2. After the slave device IC2 stores its received device address, the slave device IC2 adds 1 to its received device address and transmits the added device address to slave device IC3, and so on, until the address initialization finishes. After the address initialization finishes, the slave devices IC1 to ICn store their device addresses corresponding to the positions on the communication link. Afterwards, the master device may communicate normally with the slave devices IC1 to ICn according to the device addresses of the slave devices IC1 to ICn. However, if the above method of the address initialization is used and the communication is obstructed during the address initialization, the address initialization fails, and all subsequent communication is influenced.

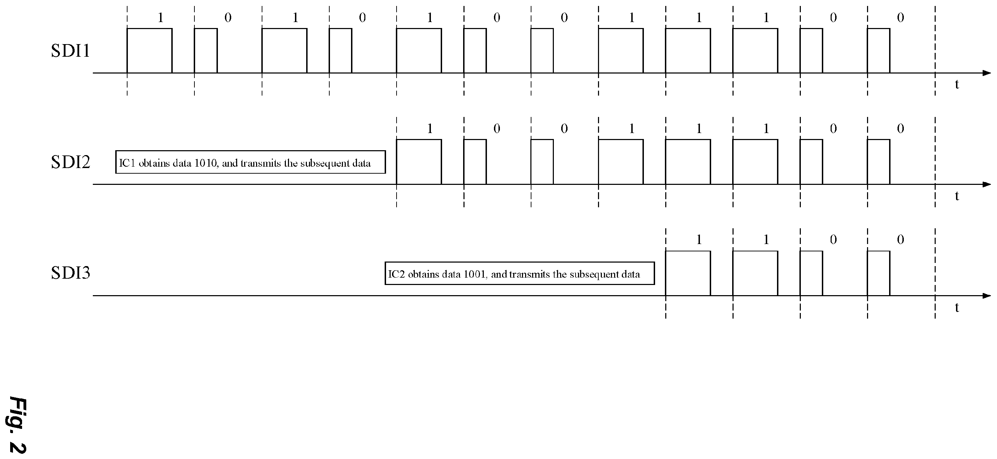

However, if the address initialization is not performed, as shown in FIG. 2, the master device needs to sequentially package the data of the all slave devices to transmit the packaged data at once no matter the master device needs to communicate with one slave device or the master device needs to communicate with a plurality of slave devices at the same time. After the slave device IC1 obtains the data, the slave device IC1 transmits the subsequent data to the slave device IC2 and so on. The aforementioned method needs to transmit the data of all slave devices on the communication link, and the communication efficiency is lower.

US 2013/124763 A1 discloses on a two-wire communication system and bidirectional signal transmission between master and slave devices.

### Summary of the invention

The present invention and its preferred embodiments are defined in the appended claims.

In light of the aforementioned drawbacks, the present invention provides a single wire serial communication method and single wire serial communication system to solve the problem of the requirement of performing the address initialization on the plurality of slave devices or the problem of lower communication efficiency without performing the address initialization on the plurality of slave devices.

In the first aspect of the present invention, a single wire serial communication method is provided and is used for a single wire serial communication system. The single wire serial communication system includes a master device and a plurality of slave devices, and the master device and the plurality of slave devices are sequentially connected by a single wire.

The single wire serial communication method includes: in every communication, transmitting a data packet by the master device, and sequentially receiving the data packet by each of the plurality of slave devices; receiving the data packet and forwarding the data packet to a next slave device by a current slave device, wherein each of the plurality of slave devices when receiving the data packet serves as the current slave device; before the data packet is forwarded to the next slave device, modifying device address data in the data packet by the current slave device; and comparing the device address data in the data packet received by the current slave device with a preset data or the device address data in the data packet transmitted by the master device in order to find at least one target slave device in the communication.

Optionally, when the single wire serial communication system is in a first type communication mode, the single wire serial communication method further includes: comparing the device address data in the data packet received by the current slave device with the preset data by the current slave device; and when the device address data in the data packet received by the current slave device is consistent with the preset data, regarding the current slave device as the target slave device in the communication and implementing corresponding operation according to communication data in the data packet by the target slave device.

Optionally, when the preset data and a calculation method of modifying the device address data in the data packet are determined, the device address data in the data packet transmitted by the master device is set so that the device address data in the data packet transmitted by the master device corresponds to each of the plurality of slave device.

Optionally, the device address data in the data packet transmitted by the master device is determined by the preset data, a position of the target slave device and a calculation method of modifying the device address data in the data packet, and the position of the target slave device corresponds to forwarding times of the data packet transmitted by the master device to the target slave device.

Optionally, the calculation method of modifying the device address data in the data packet includes at least one of increasing, decreasing or shifting the device address data in the data packet.

Optionally, when the calculation method of modifying the device address data in the data packet is to add an increasing value to the device address data in the data packet, the device address data in the data packet transmitted by the master device is configured as a difference between the preset data and a first product, and the first product is a product of a difference between the position of the target slave device and 1 and the increasing value; or when the calculation method of modifying the device address data in the data packet is to decrease the device address data in the data packet by a decreasing value, the device address data in the data packet transmitted by the master device is configured as a sum of the preset data and a first product, and the first product is a product of a difference between the position of the target slave device and 1 and the decreasing value.

Optionally, an encoding way of the device address data is LSB first.

Optionally, the preset data in the slave device is set as a fixed value.

Optionally, when the single wire serial communication system is in a second type communication mode, the single wire serial communication method further includes: comparing the device address data in the data packet received by the current slave device with the device address data transmitted by the master device; determining a position of the current slave device according to a difference between the device address data in the data packet received by the current slave device and the device address data transmitted by the master device; and finding corresponding communication data in the data packet transmitted by the master device to implement by the current slave device according to the position of the current slave device, wherein the data packet transmitted by the master device includes a plurality of communication data corresponding to the plurality of slave devices.

Optionally, the device address data transmitted by the master device is a preset fixed value, and the fixed value is determined by parameters of the plurality of slave devices.

In the second aspect of the present invention, a single wire serial communication system is provided. The single wire serial communication system includes a master device and a plurality of slave devices, and the master device and the plurality of slave devices are sequentially connected by a single wire to form a communication link.

In every communication, the master device transmits a data packet, and each of the plurality of slave devices sequentially receives the data packet; a current slave device receives the data packet and forwards the data packet to a next slave device in the communication link, wherein each of the plurality of slave devices when receiving the data packet serves as the current slave device; before the data packet is forwarded to the next slave device, the current slave device modifies device address data in the data packet; and the current slave device compares the device address data in the data packet received by the current slave device with a preset data or the device address data transmitted in the data packet by the master device in order to find at least one target slave device in the communication.

Optionally, a calculation method of modifying the device address data in the data packet includes at least one of increasing, decreasing or shifting the device address data in the data packet.

Optionally, when the single wire serial communication system is in a first type communication mode, the current slave device compares the device address data in the data packet received by the current slave device with the preset data, and when the device address data in the data packet received by the current slave device is consistent with the preset data, the current slave device is regarded as the target slave device in the communication and implements corresponding operation according to communication data in the data packet.

Optionally, the device address data in the data packet transmitted by the master device is determined by the preset data, a position of the target slave device and a calculation method of modifying the device address data in the data packet, and the position of the target slave device corresponds to forwarding times of the data packet transmitted by the master device to the target slave device.

Optionally, when the calculation method of modifying the device address data in the data packet is to add an increasing value to the device address data in the data packet, the device address data in the data packet transmitted by the master device is configured as a difference between the preset data and a first product, and the first product is a product of a difference between the position of the target slave device and 1 and the increasing value; or when the calculation method of modifying the device address data in the data packet is to decrease the device address data in the data packet by a decreasing value, the device address data in the data packet transmitted by the master device is configured as a sum of the preset data and a first product, and the first product is a product of a difference between the position of the target slave device and 1 and the decreasing value.

Optionally, the preset data in the slave device is set as a fixed value.

Optionally, when the single wire serial communication system is in a second type communication mode, the current slave device compares the device address data in the data packet received by the current slave device with the device address data transmitted by the master device, and determines a position of the current slave device according to a difference between the device address data in the data packet received by the current slave device and the device address data transmitted by the master device, and finds corresponding communication data in the data packet transmitted by the master device to implement according to the position of the current slave device, wherein the data packet transmitted by the master device includes a plurality of communication data corresponding to the plurality of slave devices.

Optionally, the device address data transmitted by the master device is a preset fixed value, and the fixed value is determined by parameters of the plurality of slave devices.

Optionally, an encoding way of the device address data is LSB first.

Optionally, the plurality of slave devices in the communication link include a first slave device to a nth slave device, n is equal to and greater than two, a data output terminal of the master device is connected to a data receiving terminal of the first slave device, data receiving terminals of a second slave device to the nth slave device are respectively connected to data output terminals of the first slave device to a (n-1)th slave device in the communication link, and the first slave device to the nth slave device are same apparatus, a data output terminal of the nth slave device is connected to a data input terminal of the master device or a data output terminal of the nth slave device is not connected to a data input terminal of the master device.

The present invention aims to provide the single wire serial communication method and single wire serial communication system. In every communication, the master device transmits the data packet, and each of the plurality of slave devices sequentially receives the data packet. The current slave device receives the data packet and forwards the data packet to the next slave device in the communication link, and before the data packet are forwarded to the next slave device, the current slave device modifies device address data in the data packet. The current slave device compares the device address data in the data packet received by the current slave device with the preset data or the device address data in the data packet transmitted by the master device in order to find at least one target slave device in the communication. The single wire serial communication method and the single wire serial communication system solve the problem of automatic addressing of single wire serial communication of the plurality of same devices without performing address initialization, thereby avoiding all communication on the latter stage from influencing due to the failure of the address initialization. Besides, the single wire serial communication method and the single wire serial communication system are not required to transmit the data of all slave devices on the communication link in every communication, and the communication efficiency is improved.

### The drawings

In order to clearly describe the embodiments of the present invention or the technical solutions of the conventional technology, the accompanying drawings which the embodiments of the present invention or the technical solutions of the conventional technology require are simply explained as follows. Obviously, the accompanying drawings in the following description are merely the embodiments of the present invention. The person in the art may obtain the other drawings according to the accompanying drawings provided by the present invention without any inventive steps.
FIG. 1 is a structural diagram of a conventional single wire serial communication system.
FIG. 2 is a schematic diagram of a conventional communication method without performing address initialization.
FIG. 3 is a coding diagram of a first communication protocol used in a single wire serial communication system according to the first embodiment of the present invention.
FIG. 4 is a schematic diagram of a communication data transmission method of a single wire serial communication system according to the first embodiment of the present invention.
FIG. 5 is a schematic diagram of another communication data transmission method of a single wire serial communication system according to the first embodiment of the present invention.
FIG. 6 is a structural diagram of a single wire serial communication system according to the second embodiment of the present invention.
FIG. 7 is a coding diagram of a second communication protocol used in a single wire serial communication system according to the first embodiment of the present invention.

### Detailed description

The following describes the present invention based on the embodiments, but the present invention is not merely limited to these embodiments. The detailed descriptions of the present invention in the following elaborate on some specific details. Those skilled in the art can fully understand the present invention without the description of these details. Well-known methods, procedures, processes, components and circuits are not described in detail to avoid obscuring the essence of the present invention.

In addition, the person skilled in the art should understand that the accompanying drawings are only for the purpose of illustration and are not drawn to scale.

At the same time, it should be understood that "circuit" in the following description refers to a conducting loop formed by at least one component or sub-circuit through electrical connection or electromagnetic connection. When a component or a circuit is referred to as being "connected" to another component or the component/circuit is referred to as being "connected" between two nodes, it may be directly coupled or connected to another component or intervening component(s) may be present. The connection between the components may be physical, logical, or a combination thereof. On the contrary, when a component is referred to as being "directly coupled" or "directly connected" to another component, it is meant that there are no intervening component(s) present therebetween.

Unless otherwise required by the context, the terms "comprise" or "comprising," "include" or "including" and the like used in the whole description herein and throughout the claims should be interpreted as inclusive meaning rather than exclusive or exhaustive meaning. In other words, the terms "comprise" or "comprising," "include" or "including" and the like used in the whole description herein and throughout the claims should be interpreted as meaning of "including but be not limited to."

In the description of the present invention, it should be understood that the terms "first", "second" and the like are only used for the purpose of explanation, and should not be construed as indicating or implying relative importance. Additionally, in the description of the present invention, "plural" means two or more unless otherwise specified.

The single wire serial communication system in the first embodiment of the present invention may be embodied in the structure of the structural diagram of the conventional single wire serial communication system as shown in FIG. 1. Please continue to refer to FIG. 1, the single wire serial communication system includes a master device Master and a plurality of slave devices including a first slave device IC1 to an nth slave device ICn. The master device Master and a first slave device IC1 to an nth slave device ICn are sequentially connected by a single wire to form a communication link. The single wire serial communication system in the first embodiment of the present invention is not required to perform address initialization on the first slave device IC1 to the nth slave device ICn. When the single wire serial communication system is in a first type communication mode, the master device Master is aimed to find one target slave device in every communication. When the single wire serial communication system is in the first type communication mode, in every communication, the master device Master transmits a data packet, and each of the plurality of slave devices IC1~ICn sequentially receives the data packet; a current slave device receives the data packet and forwards the data packet to a next slave device in the communication link, wherein each of the plurality of slave devices IC1~ICn when receiving the data packet serves as the current slave device; the current slave device modifies device address data in the data packet before the data packet is forwarded to the next slave device; and the current slave device compares the device address data in the data packet received by the current slave device with a preset data m in order to find the one target slave device in the communication. When the device address data in the data packet received by the current slave device is consistent with the preset data m, the current slave device is regarded as the target slave device in the communication and implements corresponding operation according to communication data in the data packet.

Specifically, master device Master transmits a data packet, and the first slave device IC1 to the nth slave device ICn sequentially receive the data packet, and the first slave device IC1 to the (n-1)th slave device ICn-1 sequentially forward the data packet to its next slave device (i.e., the second slave device IC2 to the nth slave device ICn) in the communication link. Before one of the first slave device IC1 to the (n-1)th slave device ICn-1 forwards the data packet to its next slave device, the one of the first slave device IC1 to the (n-1)th slave device ICn-1 modifies the device address data in the data packet received by the one of the first slave device IC1 to the (n-1)th slave device ICn-1. The one of the first slave device IC1 to the (n-1)th slave device ICn-1 compares the device address data in the received data packet with preset data m. When the device address data in the received data packet in the slave device is consistent with the preset data m, the slave device is regarded as the target slave device in the communication and implements corresponding operation according to communication data in the data packet. The first slave device IC1 to the nth slave device ICn herein are the same apparatus. In the first embodiment, the preset data m is determined by the slave device, and the preset data m in the slave device is set as a fixed value. In other words, the preset data m in each of the first slave device IC1 to the nth slave device ICn is the same, but the present invention is not limiter thereto.

In the single wire serial communication system of the first embodiment, the data output terminal MDO of the master device Master is connected to the data receiving terminal SDI1 of the first slave device IC1, and the data receiving terminal SDI2 of the second slave device IC2 to the data receiving terminal SDIn of the nth slave device ICn are respectively connected to the data output terminal SDO1 of the first slave device IC1 to the data output terminal SDOn-1 of the (n-1)th slave device ICn-1 in the communication link, and the data output terminal SDOn of the nth slave device ICn is connected to the data input terminal MDI of the master device Master, thereby forming a circular single wire serial communication system.

Furthermore, because the single wire serial communication system in the first embodiment of the present invention does not perform the address initialization on the first slave device IC1 to the nth slave device ICn, in order to distinguish the first slave device IC1 to the nth slave device ICn, when the preset data m and the calculation method of modifying the device address data in the data packet are determined, the device address data in the data packet transmitted by the master device (Master) is set so that the device address data in the data packet transmitted by the master device Master corresponds to each of the first slave device IC1 to the nth slave device ICn, thus finding the one target slave device in every communication.

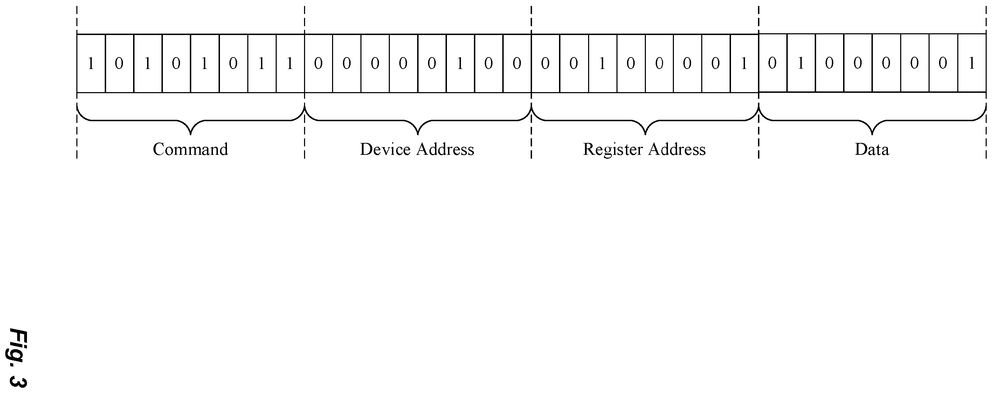

FIG. 3 is a coding diagram of a first communication protocol used in a single wire serial communication system according to the first embodiment of the present invention. The data packet transmitted by the master device Master includes command data, device address data, register address data and communication data Data. During the process of forwarding the data packet, the slave device in the first embodiment of the present invention addresses by modifying the device address data in the data packet in order to match the target slave device according to the preset calculation method, thus the target slave device implements corresponding operation according to the communication data in the data packet. It should be explained that FIG. 3 merely denotes an optional encoding way, but the first embodiment of the present invention does not limit the specific coding of the communication protocol, and the coding only including the device address data shall be within the optional scope of the present invention.

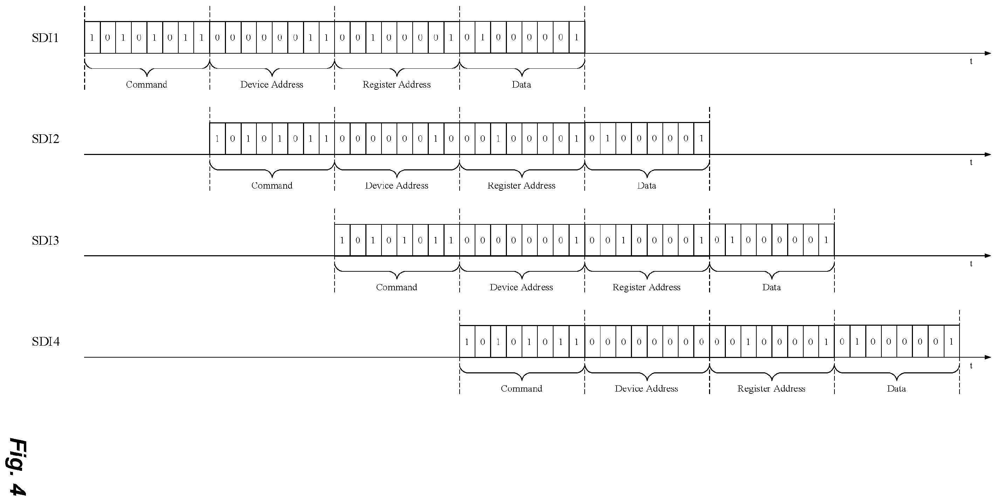

FIG. 4 is a schematic diagram of a communication data transmission method of a single wire serial communication system according to the first embodiment of the present invention. After the master device Master transmits the data packet, the data receiving terminal SDI1 of the first slave device IC1 receives the data packet transmitted by the master device Master, and the first slave device IC1 compares the device address data in the received data packet with the preset data m and modifies the device address data in the received data packet in a preset manner, and the first slave device IC1 can modify or not modify the other data (i.e. the command data, the register address data or the communication data) in the received data packet when modifying the device address data in the received data packet. If the device address data received by the first slave device IC1 is consistent with the preset data m, the first slave device IC1 determines that the data packet transmitted by the master device Master is for the first slave device IC1 and implements corresponding operation according to the communication data in the received data packet, and the target slave device is found in this communication. At the same time, the first slave device IC1 transmits the data packet with the modified device address data from the data output terminal SDO1 to the data receiving terminal SDI2 of the second slave device IC2. The data receiving terminal SDI2 of the second slave device IC2 receives the data packet forwarded by the first slave device IC1, and the second slave device IC2 compares the device address data in the received data packet with the preset data m and modifies the device address data in the received data packet by a preset manner, and the second slave device IC2 can modify or not modify the other data in the received data packet when modifying the device address data in the received data packet. If the device address data received by the second slave device IC2 is consistent with the preset data m, the second slave device IC2 determines that the data packet transmitted by the master device Master is for the second slave device IC2 and implements corresponding operation according to the communication data in the received data packet, and the target slave device is found in this communication. At the same time, the second slave device IC2 transmits the data packet with the modified device address data from the data output terminal SDO2 to the data receiving terminal SDI3 of the third slave device IC3, and so on.

Please continue to refer to FIG. 4. In the first embodiment of the present invention, the calculation method of modifying the device address data by each of the first slave device IC1 to the nth slave device ICn is decreasing the device address data by 1, and the preset data m is configured as 1 is taken as an example to describe the addressing process as follows: the device address data in the data packet transmitted by the master device Master are 0x3 (taking hexadecimal codes as an example), and the device address data in the data packet received by the data receiving terminal SDI1 of the first slave device IC1 is 0x3. The device address data 0x3 are not consistent with the preset data m=1, and the first slave device IC1 decreases the device address data by 1 and transmits the modified device address data 0x2 to the data receiving terminal SDI2 of the second slave device IC2. The device address data of the data packet received by the data receiving terminal SDI2 of the second slave device IC2 is 0x2. The device address data 0x2 are not consistent with the preset data m=1, and the second slave device IC2 decreases the device address data by 1 and transmits the modified device address data 0x1 to the data receiving terminal SDI3 of the third slave device IC3. The device address data of the data packet received by the data receiving terminal SDI3 of the third slave device IC3 is 0x1. The device address data 0x1 are consistent withi the preset data m=1, and thus, the third slave device IC3 determines that the data packet transmitted by the master device Master is for the third slave device IC3 and implements corresponding operation according to the communication data in the received data packet. In one embodiment, when the target slave device is found, this communication may be over. In another embodiment, when the target slave device is found, the data packet may continue to be transmitted and/or can be modified by the slave devices after the target slave device in the communication link, but the subsequent slave devices are not target slave devices.

It should be explained that the device address data in the data packet transmitted by the master device Master is determined by the preset data m, the position of the target slave device and the calculation method of modifying the device address data in the data packet, wherein the position of the target slave device corresponds to forwarding times of the data packet transmitted by the master device Master to the target slave device. If the embodiment in FIG. 4 is modified as follows: the calculation method of modifying the device address data by each of the first slave device IC1 to the nth slave device ICn is to increase the device address data by 1, and the preset data m is 6. If the master device Master transmits the data packet to the fourth slave IC4, the device address data in the data packet transmitted by the master device Master is 3. The specific calculation method is: p=m-b*(x-1), wherein p is the device address data in the data packet transmitted by the master device Master, b is an increasing value, x is the position of the target slave, and the specific values are substituted into the aforementioned calculation method: p=6-1*(4-1)=3. Similarly, when the calculation method of modifying the device address data by each of the first slave device IC1 to the nth slave device ICn is to decrease the device address data by b, the calculation method of the device address data in the data packet transmitted by the master device Master may be also obtained as follows: p=m+b*(x-1).

According to the aforementioned analysis, a conclusion may be obtained as follows: when the calculation method of modifying the device address data by each of the first slave device IC1 to the nth slave device ICn is to increase the device address data by increasing value b, the device address data in the data packet transmitted by the master device Master is configured as the difference between the preset data m and a first product, and the first product is the product of the difference between the position x of the target slave device and 1 and the increasing value b; when the calculation method of modifying the device address data by each of the first slave device IC1 to the nth slave device ICn is to decrease the device address data by decreasing value b, the device address data in the data packet transmitted by the master device Master is configured as the sum of the preset data m and the first product, and the first product is the product of the difference between the position x of the target slave device and 1 and the decreasing value b.

It should be explained that the calculation method of modifying the device address data by each of the first slave device IC1 to the nth slave device ICn is not limited to increasing or decreasing the device address data. In another embodiment, the calculation method of modifying the device address data by each of the first slave device IC1 to the nth slave device ICn may adopt shifting the device address data. Certainly, the calculation method of modifying the device address data by each of the first slave device IC1 to the nth slave device ICn may be the known or the unknown modifying method which can modify the device address data.

It can be hereto seen that: in the first embodiment of the present invention, the single wire serial communication system is in the first type communication mode, the master device transmits the data packet, and the slave device receives and forwards the data packet to the next slave device in the communication link every communication. Before the data packets are forwarded to the next slave device, the slave device modifies device address data in the data packet received by the slave device. The slave device compares the device address data in the received data packet with preset data, and when the device address data in the received data packet is consistent with the preset data, the slave device is regarded as the target slave device in the communication and implements corresponding operation according to communication data in the received data packet. The single wire serial communication method and the single wire serial communication system solve the problem of automatic addressing of single wire serial communication of the plurality of same apparatus, and do not require address initialization, thereby avoiding all communication on the latter stage from influencing due to the failure of the address initialization. Besides, the single wire serial communication method and the single wire serial communication system are not required to transmit the data of all slave device on the communication link, and the communication efficiency is improved.

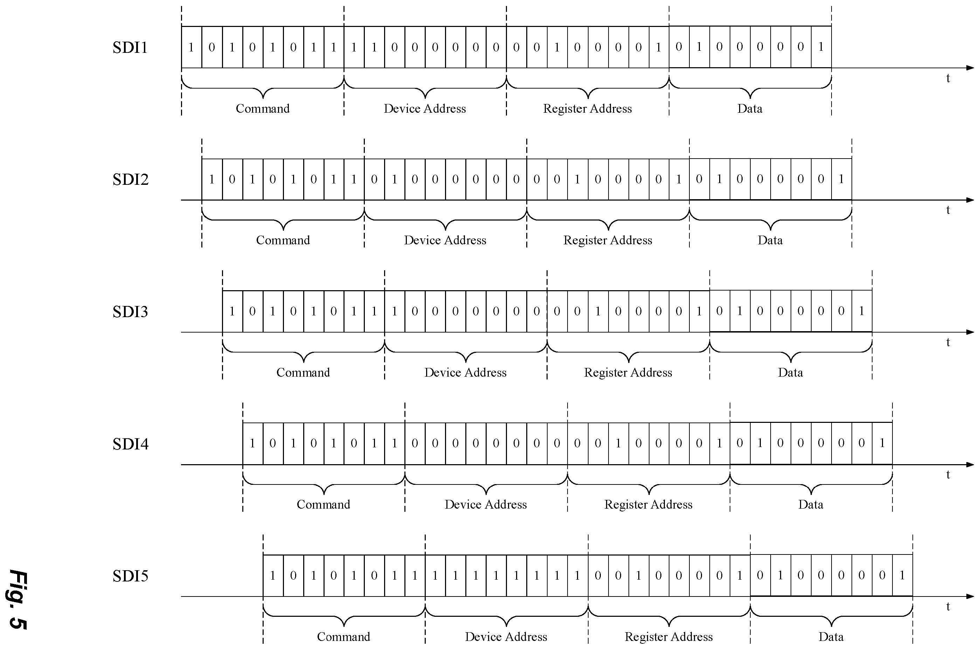

FIG. 5 is a schematic diagram of another communication data transmission method of a single wire serial communication system according to the first embodiment of the present invention. The difference between the single wire serial communication method shown in FIG. 5 and the single wire serial communication method shown in FIG. 4 is that: the encoding way of the device address data is MSB first in FIG. 4, and the encoding way of the device address data is LSB first in FIG. 5.

Because the encoding way of the device address data is MSB first in the communication data transmission method shown in FIG. 4, when the device address data requires modifying by increasing or decreasing, the calculation of increasing or decreasing the device address data starts after the transmission of the LSB of the device address data completes. If the communication frequency is z Hz, namely, transmitting one bit message takes 1/z s, and if the bit of the device address data is y bit, the delay time between the data packet in the data receiving terminal SDI and the data packet in the data output terminal SDO of each of the first slave device IC1 to the nth slave device ICn is at least y/z s. Because the encoding way of the device address data is LSB first in the communication data transmission method shown in FIG. 5, when the device address data requires modifying by increasing or decreasing, a bit of the device address data can be modified after the bit of the device address data is obtained, so the delay time between the data packet in the data receiving terminal SDI and the data packet in the data output terminal SDO of each of the first slave device IC1 to the nth slave device ICn may at least reach 1/z s. Hence, the communication timeliness of the single wire serial communication system can be significantly improved.

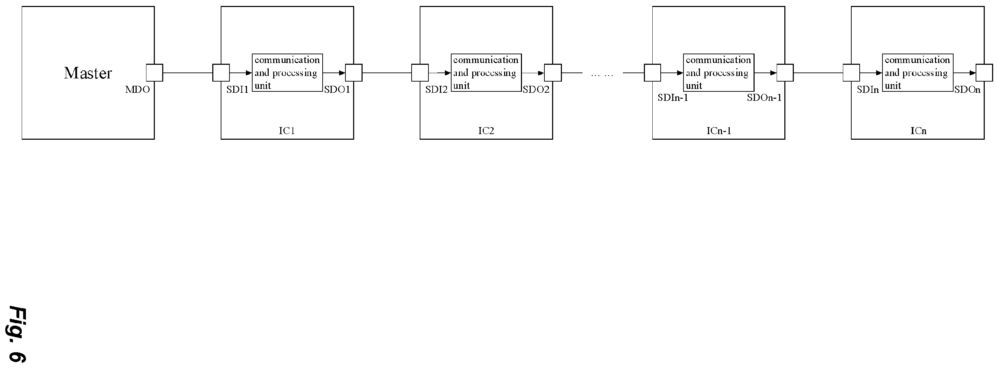

FIG. 6 is a structural diagram of a single wire serial communication system according to the second embodiment of the present invention. The difference between the second embodiment and the first embodiment is described as follows.

In the single wire serial communication system, the data output terminal MDO of the master device Master is connected to the data receiving terminal SDI1 of the first slave device IC1, and the data receiving terminal SDI2 of the second slave device IC2 to the data receiving terminal SDIn of the nth slave device ICn are respectively connected to the data output terminal SDO1 of the first slave device IC1 to the data output terminal SDOn-1 of the (n-1)th slave device ICn-1 in the communication link, and the data output terminal SDOn of the nth slave device ICn is not connected to the data input terminal MDI of the master device Master. As long as the single wire serial communication system can implement unidirectional data transmission, there is no need to form the circular single wire serial communication system, and in other words, as long as the first slave device IC1 to the nth slave device ICn can receive the data packet transmitted by the master device Master, there is no need to dispose the communication link where the data packet transmitted by the first slave device IC1 to the nth slave device ICn is transmitted to the master device Master. The first type communication mode and the second type communication mode of the single wire serial communication method in the present invention are also applicable to the second embodiment, and will not be repeated here.

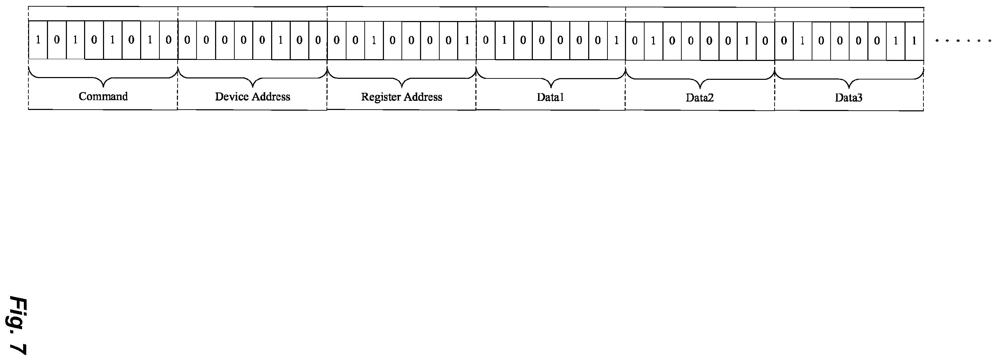

FIG. 7 is a coding diagram of a second communication protocol used in a single wire serial communication system according to the first embodiment of the present invention. The data packet transmitted by the master device Master includes command data, device address data, register address data and a plurality of communication data Data1~Datan. During the process of forwarding the data packet, the slave device in the first embodiment of the present invention addresses by modifying the device address data in the data packet in order to match more than one target slave device according to the preset calculation method, thus the target slave devices implement corresponding operation according to the corresponding communication data in the data packet. It should be explained that FIG. 7 merely denotes an optional encoding way, but the first embodiment of the present invention does not limit the specific coding of the communication protocol, and the coding only including the device address data shall be within the optional scope of the present invention.

On the basis of the first type communication mode the present invention, the single wire serial communication method further includes a second type communication mode. When the single wire serial communication system is in the second type communication mode every time, namely, the master device Master finds the plurality of target slave devices. When the single wire serial communication system is in the second type communication mode, in every communication, the master device Master transmits a data packet, and each of the plurality of slave devices IC1~ICn sequentially receives the data packet; a current slave device receives the data packet and forwards the data packet to a next slave device in the communication link, wherein each of the plurality of slave devices IC1~ICn when receiving the data packet serves as the current slave device; the current slave device modifies device address data in the data packet before the data packet is forwarded to the next slave device; and the current slave device compares the device address data in the data packet received by the current slave device with the device address data transmitted in the data packet by the master device Master in order to find more than one target slave device in the communication. Further, the current slave device compares the device address data in the data packet received by the current slave device with the device address data transmitted by the master device Master, and determines a position of the current slave device according to a difference between the device address data in the data packet received by the current slave device and the device address data transmitted by the master device Master, and finds corresponding communication data in the data packet transmitted by the master device Master to implement according to the position of the current slave device, wherein the data packet transmitted by the master device Master comprises a plurality of communication data corresponding to the plurality of slave devices IC1~ICn.

Specifically, the slave device compares the device address data in the received data packet with the device address data transmitted by the master device Master, and deduces the position of the slave device from the difference between the device address data in the received data packet and the device address data transmitted by the master device Master, and finds corresponding communication data in the data packet transmitted by the master device Master to implement according to the position of the slave device. The data packet transmitted by the master device Master includes the plurality of communication data shown in FIG. 7 corresponding to the plurality of slave devices IC1~ICn, and the device address data transmitted by the master device Master is a preset fixed value, and the fixed value is determined by the parameters of the plurality of slave devices IC1~ICn.

It should be explained that the single wire serial communication system determines whether to be in the first type communication mode or the second type communication mode according to the command data in the data packet every communication. Specifically, when the single wire serial communication system needs to be in the first type communication mode, the command data are first data; when the single wire serial communication system needs to be in the second type communication mode, the command data are second data, wherein the first data are different from the second data. It should be explained that the values of the first data and the second data are not unique and are not limited in the present invention.

Please refer to FIG. 7 and take an example to describe the operation of the second type communication mode. Assume the calculation method of modifying the device address data by each of the first slave device IC1 to the nth slave device ICn is decreasing the device address data by 1, and the device address data of the first slave device IC1 to the nth slave device ICn are all set as the known device address data 0xFF. Hence, the device address data of the data packet transmitted by the master device Master is 0xFF, and the device address data of the data packet received by the data receiving terminal SDI1 of the first slave device IC1 is 0xFF. The difference between the device address data 0xFF received by the first slave device IC1 and the device address data 0xFF in the data packet transmitted by the master device Master is 0, and the first slave device IC1 finds the communication data Data1 from the first part of the communication data in the data packet. And the first slave device IC1 decreases the device address data by 1 and transmits the decreased device address data 0xFE to the second slave device IC2. The device address data of the data packet received by the data receiving terminal SDI2 of the second slave device IC2 is 0xFE. The difference between the device address data 0xFE received by the second slave device IC2 and the device address data 0xFF in the data packet transmitted by the master device Master is 1, and the second slave device IC2 finds the communication data Data2 from the second part of the communication data in the data packet. And the second slave device IC2 decreases the device address data by 1 and transmits the decreased device address data 0xFD to the third slave device IC3. The device address data of the data packet received by the data receiving terminal SDI3 of the third slave device IC3 is 0xFD. The difference between the device address data 0xFD received by the third slave device IC3 and the device address data 0xFF in the data packet transmitted by the master device Master is 2, and the third slave device IC3 finds the communication data Data3 from the third part of the communication data in the data packet, and so on. It should be explained that the device address data in the data packet transmitted by the master device Master herein is not limited to 0xFF, and 0xFF is just an example for explanation. The device address data of the data packet transmitted by the master device Master may be any preset fixed value as long as the device address data of the data packet transmitted by the master device Master matches the calculation method of modifying the device address data by each of the first slave device IC1 to the nth slave device ICn. The calculation method of modifying the device address data by each of the first slave device IC1 to the nth slave device ICn is not limited to decreasing the device address data by 1, and may be decreasing or increasing the device address data by another fixed value, or may be shifting the device address data, or may be decreasing or increasing the device address data by an unfixed value (e.g. the decreasing or increasing values of the plurality of slave devices are proportional in turn in the communication link), etc.

It can be hereto seen that: in the second type communication mode of the first embodiment of the present invention, the master device Master finds the plurality of target slave devices every communication. The master device Master transmits the data packet. The slave device receives and forwards the data packet to the next slave device, and before the data packet is forwarded to the next slave device, the slave device modifies device address data in the data packet. The slave device compares the device address data in the received data packet with the device address data transmitted by the master device Master, and deduces the position of the slave device from the difference between the device address data in the received data packet and the device address data transmitted by the master device Master, and finds corresponding communication data in the data packet transmitted by the master device Master to implement the corresponding operation according to the position of the slave device. The single wire serial communication method and the single wire serial communication system solve the problem of automatic addressing of the single wire serial communication of the plurality of same apparatus, and the single wire serial communication system only needs to transmit the data of all the slave devices on the communication link without the address initialization when being in a one-to-many communication mode, thereby avoiding all communication on the latter stage from influencing due to the failure of the address initialization.

It can be hereto seen that: in the first type communication mode, in every communication, the master device transmits the data packet, the slave device receives and forwards the data packet to the next slave device, and before the data packet is forwarded to the next slave device, the slave device modifies device address data in the data packet. The slave device compares the device address data in the received data packet with a preset data, and when the device address data in the received data packet matches the preset data, the slave device is regarded as the target slave device in the communication and implements corresponding operation according to communication data. The single wire serial communication method and the single wire serial communication system solve the problem of automatic addressing of single wire serial communication of the plurality of the same apparatus, and do not require address initialization, thereby avoiding all communication on the latter stage from influencing due to the failure of the address initialization. Besides, the single wire serial communication method and the single wire serial communication system do not require transmitting the data of all slave devices on the communication link, and the communication efficiency is improved.

### List of reference signs:

IC1~ICn: slave device
Master: master device
MDO, SDO1~ SDOn: data output terminal
SDI1~SDIn: data receiving terminal
MDI: data input terminal

## Claims

1. A single wire serial communication method for a single wire serial communication system comprising a master device (Master) and a plurality of slave devices (IC1~ICn), wherein the master device and the plurality of slave devices (IC1~ICn) are sequentially connected by a single wire, the single wire serial communication method comprising:
in every communication, transmitting a data packet by the master device (Master), and sequentially receiving the data packet by each of the plurality of slave devices (IC1~ICn);
receiving the data packet and forwarding the data packet to a next slave device by a current slave device, wherein each of the plurality of slave devices (IC1~ICn) when receiving the data packet serves as the current slave device;
before the data packet is forwarded to the next slave device, modifying device address data in the data packet by the current slave device (IC1~ICn); and
comparing the device address data in the data packet received by the current slave device with a preset data (m) or the device address data in the data packet transmitted by the master device (Master) in order to find at least one target slave device in the communication.

2. The single wire serial communication method according to claim 1, wherein when the single wire serial communication system is in a first type communication mode, the single wire serial communication method further comprises:
comparing the device address data in the data packet received by the current slave device with the preset data (m) by the current slave device; and
when the device address data in the data packet received by the current slave device is consistent with the preset data (m), regarding the current slave device as the target slave device in the communication and implementing corresponding operation according to communication data in the data packet by the target slave device.

3. The single wire serial communication method according to claim 2, wherein when the preset data (m) and a calculation method of modifying the device address data in the data packet are determined, the device address data in the data packet transmitted by the master device (Master) is set so that the device address data in the data packet transmitted by the master device (Master) corresponds to each of the plurality of slave device (IC1~ICn).

4. The single wire serial communication method according to claim 2 or claim 3, wherein the device address data in the data packet transmitted by the master device (Master) is determined by the preset data (m), a position of the target slave device and a calculation method of modifying the device address data in the data packet, and the position of the target slave device corresponds to forwarding times of the data packet transmitted by the master device (Master) to the target slave device.

5. The single wire serial communication method according to claim 2 or claim 3 or claim 4, wherein the calculation method of modifying the device address data in the data packet comprises at least one of increasing, decreasing or shifting the device address data in the data packet.

6. The single wire serial communication method according to any one of claim 2 to claim 5, wherein when the calculation method of modifying the device address data in the data packet is to add an increasing value to the device address data in the data packet, the device address data in the data packet transmitted by the master device (Master) is configured as a difference between the preset data and a first product, and the first product is a product of a difference between the position of the target slave device and 1 and the increasing value; or when the calculation method of modifying the device address data in the data packet is to decrease the device address data in the data packet by a decreasing value, the device address data in the data packet transmitted by the master device (Master) is configured as a sum of the preset data and a first product, and the first product is a product of a difference between the position of the target slave device and 1 and the decreasing value.

7. The single wire serial communication method according to any one of claim 1 to claim 6, wherein an encoding way of the device address data is LSB first.

8. The single wire serial communication method according to any one of claim 1 to claim 7, wherein the preset data in the slave device is set as a fixed value.

9. The single wire serial communication method according to claim 1, wherein when the single wire serial communication system is in a second type communication mode, the single wire serial communication method further comprises:
comparing the device address data in the data packet received by the current slave device with the device address data transmitted by the master device (Master);
determining a position of the current slave device according to a difference between the device address data in the data packet received by the current slave device and the device address data transmitted by the master device (Master); and
finding corresponding communication data in the data packet transmitted by the master device (Master) to implement by the current slave device according to the position of the current slave device, wherein the data packet transmitted by the master device (Master) comprises a plurality of communication data corresponding to the plurality of slave devices (IC1~ICn).

10. The single wire serial communication method according to claim 9, wherein the device address data transmitted by the master device (Master) is a preset fixed value, and the fixed value is determined by parameters of the plurality of slave devices (IC1~ICn).

11. A single wire serial communication system comprising a master device (Master) and a plurality of slave devices (IC1~ICn), wherein the master device (Master) and the plurality of slave devices (IC1~ICn) are sequentially connected by a single wire to form a communication link, the single wire serial communication system comprising:
in every communication, the master device (Master) being adapted to transmit a data packet, and each of the plurality of slave devices (IC1~ICn) being adapted to sequentially receive the data packet;
a current slave device adapted to receive the data packet and to forward the data packet to a next slave device in the communication link, wherein each of the plurality of slave devices (IC1~ICn) when receiving the data packet serves as the current slave device;
before the data packet is forwarded to the next slave device, the current slave device is adapted to modify device address data in the data packet; and
the current slave device is adapted to compare the device address data in the data packet received by the current slave device with a preset data (m) or the device address data transmitted in the data packet by the master device (Master) in order to find at least one target slave device in the communication.

12. The single wire serial communication system according to claim 11, wherein a calculation method of modifying the device address data in the data packet comprises at least one of increasing, decreasing or shifting the device address data in the data packet.

13. The single wire serial communication system according to claim 11 or claim 12, wherein when the single wire serial communication system is in a first type communication mode, the current slave device is adapted to compare the device address data in the data packet received by the current slave device with the preset data (m), and when the device address data in the data packet received by the current slave device is consistent with the preset data (m), the current slave device is regarded as the target slave device in the communication and implements corresponding operation according to communication data in the data packet.

14. The single wire serial communication system according to claim 13, wherein the device address data in the data packet transmitted by the master device (Master) is determined by the preset data (m), a position of the target slave device and a calculation method of modifying the device address data in the data packet, and the position of the target slave device corresponds to forwarding times of the data packet transmitted by the master device (Master) to the target slave device.

15. The single wire serial communication system according to claim 13 or claim 14, wherein when the calculation method of modifying the device address data in the data packet is to add an increasing value to the device address data in the data packet, the device address data in the data packet transmitted by the master device (Master) is configured as a difference between the preset data (m) and a first product, and the first product is a product of a difference between the position of the target slave device and 1 and the increasing value; or when the calculation method of modifying the device address data in the data packet is to decrease the device address data in the data packet by a decreasing value, the device address data in the data packet transmitted by the master device (Master) is configured as a sum of the preset data and a first product, and the first product is a product of a difference between the position of the target slave device and 1 and the decreasing value.

16. The single wire serial communication system according to any one of claim 13 to claim 15, wherein the preset data (m) in the slave device is set as a fixed value.

17. The single wire serial communication system according to claim 11or claim 12, wherein when the single wire serial communication system is in a second type communication mode, the current slave device is adapted to compare the device address data in the data packet received by the current slave device with the device address data transmitted by the master device (Master), and to determine a position of the current slave device according to a difference between the device address data in the data packet received by the current slave device and the device address data transmitted by the master device (Master), and to find corresponding communication data in the data packet transmitted by the master device (Master) to implement according to the position of the current slave device, wherein the data packet transmitted by the master device (Master) comprises a plurality of communication data corresponding to the plurality of slave devices (IC1~ICn).

18. The single wire serial communication system according to claim 17, wherein the device address data transmitted by the master device (Master) is a preset fixed value, and the fixed value is determined by parameters of the plurality of slave devices (IC1~ICn).

19. The single wire serial communication system according to any one of claim 11 to claim 18, wherein an encoding way of the device address data is LSB first.

20. The single wire serial communication system according to any one of claim 11 to claim 19, wherein the plurality of slave devices (IC1~ICn) in the communication link comprise a first slave device (IC1) to a nth slave device (ICn), n is equal to and greater than two, a data output terminal of the master device (Master) is connected to a data receiving terminal of the first slave device (IC1), data receiving terminals of a second slave device (IC2) to the nth slave device (ICn) are respectively connected to data output terminals of the first slave device (IC1) to a (n-1)th slave device (ICn-1) in the communication link, and the first slave device (IC1) to the nth slave device (ICn) are same apparatus, a data output terminal of the nth slave device (ICn) is connected to a data input terminal of the master device (Master) or a data output terminal of the nth slave device (ICn) is not connected to a data input terminal of the master device (Master).

## Patentansprüche

1. Ein-Draht-serielle-Kommunikation-Verfahren für ein Ein-Draht-serielle-Kommunikation-System, aufweisend eine Master-Vorrichtung (Master) und eine Mehrzahl von Slave-Vorrichtungen (IC1~ICn), wobei die Master-Vorrichtung und die Mehrzahl von Slave-Vorrichtungen (IC1~ICn) über einen einzigen Draht sequenziell miteinander verbunden sind, wobei das Ein-Draht-serielle-Kommunikation-Verfahren aufweist:
bei jeder Kommunikation Senden eines Datenpakets durch die Master-Vorrichtung (Master) und sequenzielles Empfangen des Datenpakets durch jede der Mehrzahl von Slave-Vorrichtungen (IC1~ICn);
Empfangen des Datenpakets und Weiterleiten des Datenpakets an eine nächste Slave-Vorrichtung durch eine aktuelle Slave-Vorrichtung, wobei jede der Mehrzahl von Slave-Vorrichtungen (IC1~ICn) beim Empfangen des Datenpakets als aktuelle Slave-Vorrichtung dient;
Modifizieren von Vorrichtungsadressdaten im Datenpaket durch die aktuelle Slave-Vorrichtung (IC1~ICn), bevor das Datenpaket an die nächste Slave-Vorrichtung weitergeleitet wird; und
Vergleichen der Vorrichtungsadressdaten in dem durch die aktuelle Slave-Vorrichtung empfangenen Datenpaket mit voreingestellten Daten (m) oder den Vorrichtungsadressdaten im durch die Master-Vorrichtung (Master) gesendeten Datenpaket, um mindestens eine Ziel-Slave-Vorrichtung in der Kommunikation zu finden.

2. Ein-Draht-serielle-Kommunikation-Verfahren gemäß Anspruch 1, wobei das Ein-Draht-serielle-Kommunikation-Verfahren, wenn das Ein-Draht-serielle-Kommunikation-System in einem Kommunikationsmodus eines ersten Typs ist, ferner aufweist:
Vergleichen der Vorrichtungsadressdaten in dem durch die aktuelle Slave-Vorrichtung empfangenen Datenpaket mit den voreingestellten Daten (m) durch die aktuelle Slave-Vorrichtung; und
wenn die Vorrichtungsadressdaten in dem durch die aktuelle Slave-Vorrichtung empfangenen Datenpaket mit den voreingestellten Daten (m) übereinstimmen, Betrachten der aktuellen Slave-Vorrichtung als die Ziel-Slave-Vorrichtung in der Kommunikation und Implementieren eines korrespondierenden Vorgangs gemäß den Kommunikationsdaten in dem Datenpaket durch die Ziel-Slave-Vorrichtung.

3. Ein-Draht-serielle-Kommunikation-Verfahren gemäß Anspruch 2, wobei, wenn die voreingestellten Daten (m) und ein Berechnungsverfahren zum Modifizieren der Vorrichtungsadressdaten im Datenpaket ermittelt werden, die Vorrichtungsadressdaten in dem durch die Master-Vorrichtung (Master) gesendeten Datenpaket so eingestellt werden, dass die Vorrichtungsadressdaten in dem durch die Master-Vorrichtung (Master) gesendeten Datenpaket mit jeder der Mehrzahl von Slave-Vorrichtungen (IC1∼ICn) korrespondieren.

4. Ein-Draht-serielle-Kommunikation-Verfahren gemäß Anspruch 2 oder Anspruch 3, wobei die Vorrichtungsadressdaten in dem durch die Master-Vorrichtung (Master) gesendeten Datenpaket durch die voreingestellten Daten (m), eine Position der Ziel-Slave-Vorrichtung und ein Berechnungsverfahren zum Modifizieren der Vorrichtungsadressdaten im Datenpaket ermittelt werden und die Position der Ziel-Slave-Vorrichtung mit Weiterleitungszeiten des durch die Master-Vorrichtung (Master) an die Ziel-Slave-Vorrichtung gesendeten Datenpakets korrespondiert.

5. Ein-Draht-serielle-Kommunikation-Verfahren gemäß Anspruch 2 oder Anspruch 3 oder Anspruch 4, wobei das Berechnungsverfahren zum Modifizieren der Vorrichtungsadressdaten im Datenpaket mindestens eines aufweist von: Erhöhen, Verringern oder Verschieben der Vorrichtungsadressdaten im Datenpaket.

6. Ein-Draht-serielle-Kommunikation-Verfahren gemäß irgendeinem der Ansprüche 2 bis 5, wobei, wenn das Berechnungsverfahren zum Modifizieren der Vorrichtungsadressdaten im Datenpaket darin besteht, einen Erhöhungswert zu den Vorrichtungsadressdaten im Datenpaket zu addieren, die Vorrichtungsadressdaten in dem durch die Master-Vorrichtung (Master) gesendeten Datenpaket als eine Differenz zwischen den voreingestellten Daten und einem ersten Produkt konfiguriert sind, und das erste Produkt ein Produkt aus einer Differenz zwischen der Position der Ziel-Slave-Vorrichtung und 1 sowie dem Erhöhungswert ist; oder wenn das Berechnungsverfahren zum Modifizieren der Vorrichtungsadressdaten im Datenpaket darin besteht, die Vorrichtungsadressdaten im Datenpaket um einen Verringerungswert zu verringern, die Vorrichtungsadressdaten in dem durch die Master-Vorrichtung (Master) gesendeten Datenpaket als eine Summe der voreingestellten Daten und eines ersten Produkts konfiguriert sind, und das erste Produkt ein Produkt aus einer Differenz zwischen der Position der Ziel-Slave-Vorrichtung und 1 und dem Verringerungswert ist.

7. Ein-Draht-serielle-Kommunikation-Verfahren gemäß irgendeinem von Anspruch 1 bis Anspruch 6, wobei ein Codierungsweg der Vorrichtungsadressdaten LSB-first ist.

8. Ein-Draht-serielle-Kommunikation-Verfahren gemäß irgendeinem von Anspruch 1 bis Anspruch 7, wobei die voreingestellten Daten in der Slave-Vorrichtung als Festwert eingestellt sind.

9. Ein-Draht-serielle-Kommunikation-Verfahren gemäß Anspruch 1, wobei, wenn das Ein-Draht-serielle-Kommunikation-System in einem Kommunikationsmodus eines zweiten Typs ist, das Ein-Draht-serielle-Kommunikation-Verfahren ferner aufweist:
Vergleichen der Vorrichtungsadressdaten in dem durch die aktuelle Slave-Vorrichtung empfangenen Datenpaket mit den durch die Master-Vorrichtung (Master) gesendeten Vorrichtungsadressdaten;
Ermitteln einer Position der aktuellen Slave-Vorrichtung gemäß einer Differenz zwischen den Vorrichtungsadressdaten in dem durch die aktuelle Slave-Vorrichtung empfangenen Datenpaket und den durch die Master-Vorrichtung (Master) gesendeten Vorrichtungsadressdaten; und
Finden von korrespondierenden Kommunikationsdaten in dem durch die Master-Vorrichtung (Master) gesendeten Datenpaket, zu implementieren durch die aktuelle Slave-Vorrichtung gemäß der Position der aktuellen Slave-Vorrichtung, wobei das durch die Master-Vorrichtung (Master) gesendete Datenpaket eine Mehrzahl von Kommunikationsdaten aufweist, die mit der Mehrzahl von Slave-Vorrichtungen (IC1~ICn) korrespondieren.

10. Ein-Draht-serielle-Kommunikation-Verfahren gemäß Anspruch 9, wobei die durch die Master-Vorrichtung (Master) gesendeten Vorrichtungsadressdaten ein voreingestellter Festwert sind und der Festwert durch Parameter der Mehrzahl von Slave-Vorrichtungen (IC1~ICn) ermittelt wird.

11. Ein-Draht-serielle-Kommunikation-System, aufweisend eine Master-Vorrichtung (Master) und eine Mehrzahl von Slave-Vorrichtungen (IC1~ICn), wobei die Master-Vorrichtung (Master) und die Mehrzahl von Slave-Vorrichtungen (IC1~ICn) sequenziell durch einen einzigen Draht verbunden sind, um eine Kommunikationsverbindung zu bilden, wobei das Ein-Draht-serielle-Kommunikation-System aufweist:
bei jeder Kommunikation ist die Master-Vorrichtung (Master) angepasst, um ein Datenpaket zu senden, und
jede aus der Mehrzahl von Slave-Vorrichtungen (IC1~ICn) ist angepasst, um das Datenpaket sequenziell zu empfangen;
eine aktuelle Slave-Vorrichtung ist angepasst, um das Datenpaket zu empfangen und das Datenpaket an eine nächste Slave-Vorrichtung in der Kommunikationsverbindung weiterzuleiten, wobei jede aus der Mehrzahl von Slave-Vorrichtungen (IC1∼ICn) beim Empfangen des Datenpakets als aktuelle Slave-Vorrichtung dient;
bevor das Datenpaket an die nächste Slave-Vorrichtung weitergeleitet wird, ist die aktuelle Slave-Vorrichtung angepasst, um Vorrichtungsadressdaten im Datenpaket zu modifizieren; und
die aktuelle Slave-Vorrichtung ist angepasst, um die Vorrichtungsadressdaten in dem durch die aktuelle Slave-Vorrichtung empfangenen Datenpaket mit voreingestellten Daten (m) oder den durch die Master-Vorrichtung (Master) im Datenpaket gesendeten Vorrichtungsadressdaten zu vergleichen, um mindestens eine Ziel-Slave-Vorrichtung in der Kommunikation zu finden.

12. Ein-Draht-serielle-Kommunikation-System gemäß Anspruch 11, wobei ein Berechnungsverfahren zum Modifizieren der Vorrichtungsadressdaten im Datenpaket mindestens eines aufweist von: Erhöhen, Verringern oder Verschieben der Vorrichtungsadressdaten im Datenpaket.

13. Ein-Draht-serielle-Kommunikation-System gemäß Anspruch 11 oder Anspruch 12, wobei, wenn das Ein-Draht-serielle-Kommunikation-System in einem Kommunikationsmodus eines ersten Typs ist, die aktuelle Slave-Vorrichtung angepasst ist, um die Vorrichtungsadressdaten in dem durch die aktuelle Slave-Vorrichtung empfangenen Datenpaket mit den voreingestellten Daten (m) zu vergleichen, und wenn die Vorrichtungsadressdaten in dem durch die aktuelle Slave-Vorrichtung empfangenen Datenpaket mit den voreingestellten Daten (m) übereinstimmen, die aktuelle Slave-Vorrichtung als die Ziel-Slave-Vorrichtung in der Kommunikation betrachtet wird und gemäß Kommunikationsdaten im Datenpaket einen korrespondierenden Vorgang implementiert.

14. Ein-Draht-serielle-Kommunikation-System gemäß Anspruch 13, wobei die Vorrichtungsadressdaten in dem durch die Master-Vorrichtung (Master) gesendeten Datenpaket durch die voreingestellten Daten (m), eine Position der Ziel-Slave-Vorrichtung und ein Berechnungsverfahren zum Modifizieren der Vorrichtungsadressdaten in dem Datenpaket ermittelt werden, und wobei die Position der Ziel-Slave-Vorrichtung mit Weiterleitungszeiten des durch die Master-Vorrichtung (Master) an die Ziel-Slave-Vorrichtung gesendeten Datenpakets korrespondiert.

15. Ein-Draht-serielle-Kommunikation-System gemäß Anspruch 13 oder Anspruch 14, wobei, wenn das Berechnungsverfahren zum Modifizieren der Vorrichtungsadressdaten im Datenpaket darin besteht, einen Erhöhungswert zu den Vorrichtungsadressdaten im Datenpaket zu addieren, die Vorrichtungsadressdaten in dem durch die Master-Vorrichtung (Master) gesendeten Datenpaket als eine Differenz zwischen den voreingestellten Daten (m) und einem ersten Produkt konfiguriert sind, und das erste Produkt ein Produkt aus einer Differenz zwischen der Position der Ziel-Slave-Vorrichtung und 1 sowie dem Erhöhungswert ist; oder wenn das Berechnungsverfahren zum Modifizieren der Vorrichtungsadressdaten im Datenpaket darin besteht, die Vorrichtungsadressdaten im Datenpaket um einen Verringerungswert zu verringern, die Vorrichtungsadressdaten in dem durch die Master-Vorrichtung (Master) gesendeten Datenpaket als eine Summe aus den voreingestellten Daten und einem ersten Produkt konfiguriert sind, und das erste Produkt ein Produkt aus einer Differenz zwischen der Position der Ziel-Slave-Vorrichtung und 1 sowie dem Verringerungswert ist.

16. Ein-Draht-serielle-Kommunikation-System gemäß irgendeinem von Anspruch 13 bis Anspruch 15, wobei die voreingestellten Daten (m) in der Slave-Vorrichtung als Festwert eingestellt sind.

17. Ein-Draht-serielle-Kommunikation-System gemäß Anspruch 11 oder Anspruch 12, wobei, wenn das Ein-Draht-serielle-Kommunikation-System in einem Kommunikationsmodus eines zweiten Typs ist, die aktuelle Slave-Vorrichtung angepasst ist, um die Vorrichtungsadressdaten in dem durch die aktuelle Slave-Vorrichtung empfangenen Datenpaket mit den durch die Master-Vorrichtung (Master) gesendeten Vorrichtungsadressdaten zu vergleichen und eine Position der aktuellen Slave-Vorrichtung gemäß einer Differenz zwischen den Vorrichtungsadressdaten in dem durch die aktuelle Slave-Vorrichtung empfangenen Datenpaket und den durch die Master-Vorrichtung (Master) gesendeten Vorrichtungsadressdaten zu ermitteln, und korrespondierende Kommunikationsdaten in dem durch die Master-Vorrichtung (Master) gesendeten Datenpaket zu finden, zu implementieren gemäß der Position der aktuellen Slave-Vorrichtung, wobei das durch die Master-Vorrichtung (Master) gesendete Datenpaket eine Mehrzahl von Kommunikationsdaten aufweist, die mit der Mehrzahl von Slave-Vorrichtungen (IC1~ICn) korrespondieren.

18. Ein-Draht-serielle-Kommunikation-System gemäß Anspruch 17, wobei die durch die Master-Vorrichtung (Master) gesendeten Vorrichtungsadressdaten ein voreingestellter Festwert sind und der Festwert durch Parameter der Mehrzahl von Slave-Vorrichtungen (IC1~ICn) ermittelt wird.

19. Ein-Draht-serielle-Kommunikation-System gemäß irgendeinem von Anspruch 11 bis Anspruch 18, wobei ein Codierungsweg der Vorrichtungsadressdaten LSB-first ist.

20. Ein-Draht-serielle-Kommunikation-System gemäß irgendeinem von Anspruch 11 bis Anspruch 19, wobei die Mehrzahl von Slave-Vorrichtungen (IC1~ICn) in der Kommunikationsverbindung eine erste Slave-Vorrichtung (IC1) bis zu einer n-ten Slave-Vorrichtung (ICn) aufweist, n gleich und größer als zwei ist, ein Datenausgangsanschluss der Master-Vorrichtung (Master) mit einem Datenempfangsanschluss der ersten Slave-Vorrichtung (IC1) verbunden ist, Datenempfangsanschlüsse einer zweiten Slave-Vorrichtung (IC2) bis zur n-ten Slave-Vorrichtung (ICn) jeweils mit Datenausgangsanschlüssen der ersten Slave-Vorrichtung (IC1) bis zu einer (n-1)-ten Slave-Vorrichtung (ICn-1) in der Kommunikationsverbindung verbunden sind, und die erste Slave-Vorrichtung (IC1) bis zur n-ten Slave-Vorrichtung (ICn) eine gleiche Vorrichtung sind, ein Datenausgangsanschluss der n-ten Slave-Vorrichtung (ICn) mit einem Dateneingangsanschluss der Master-Vorrichtung (Master) verbunden ist oder ein Datenausgangsanschluss der n-ten Slave-Vorrichtung (ICn) nicht mit einem Dateneingangsanschluss der Master-Vorrichtung (Master) verbunden ist.

## Revendications

1. Procédé de communication série à fil unique pour un système de communication série à fil unique comprenant un dispositif maître (Master) et une pluralité de dispositifs esclaves (IC1~ICn), dans lequel le dispositif maître et la pluralité de dispositifs esclaves (IC1~ICn) sont connectés séquentiellement par un fil unique, le procédé de communication série à fil unique comprenant :
à chaque communication, la transmission d'un paquet de données par le dispositif maître (Master) et la réception séquentielle du paquet de données par chacun de la pluralité de dispositifs esclaves (IC1~ICn) ;
la réception du paquet de données et le transfert du paquet de données vers un dispositif esclave suivant par un dispositif esclave actuel, chacun de la pluralité de dispositifs esclaves (IC1~ICn), lors de la réception du paquet de données, faisant office de dispositif esclave actuel ;
avant que le paquet de données ne soit transmis au dispositif esclave suivant, la modification de données d'adresse de dispositif dans le paquet de données par le dispositif esclave actuel (IC1~ICn) ; et
la comparaison des données d'adresse de dispositif dans le paquet de données reçu par le dispositif esclave actuel avec des données prédéfinies (m) ou les données d'adresse de dispositif dans le paquet de données transmis par le dispositif maître (Master) afin de trouver au moins un dispositif esclave cible dans la communication.

2. Procédé de communication série à fil unique selon la revendication 1, dans lequel, lorsque le système de communication série à fil unique est dans un mode de communication de premier type, le procédé de communication série à fil unique comprend en outre :
la comparaison des données d'adresse de dispositif dans le paquet de données reçu par le dispositif esclave actuel avec les données prédéfinies (m) par le dispositif esclave actuel ; et
lorsque les données d'adresse de dispositif dans le paquet de données reçu par le dispositif esclave actuel correspondent aux données prédéfinies (m), la considération du dispositif esclave actuel comme le dispositif esclave cible dans la communication et la mise en œuvre d'une opération correspondante selon des données de communication dans le paquet de données par le dispositif esclave cible.

3. Procédé de communication série à fil unique selon la revendication 2, dans lequel, lorsque les données prédéfinies (m) et un procédé de calcul pour modifier les données d'adresse de dispositif dans le paquet de données sont déterminés, les données d'adresse de dispositif dans le paquet de données transmis par le dispositif maître (Master) sont définies de telle sorte que les données d'adresse de dispositif dans le paquet de données transmis par le dispositif maître (Master) correspondent à chacun de la pluralité de dispositifs esclaves (IC1~ICn).

4. Procédé de communication série à fil unique selon la revendication 2 ou la revendication 3, dans lequel les données d'adresse de dispositif dans le paquet de données transmis par le dispositif maître (Master) sont déterminées par les données prédéfinies (m), une position du dispositif esclave cible et un procédé de calcul pour modifier les données d'adresse de dispositif dans le paquet de données, et la position du dispositif esclave cible correspond à des temps de transmission du paquet de données transmis par le dispositif maître (Master) vers le dispositif esclave cible.

5. Procédé de communication série à fil unique selon la revendication 2 ou la revendication 3 ou la revendication 4, dans lequel le procédé de calcul pour modifier les données d'adresse de dispositif dans le paquet de données comprend au moins l'un parmi : une augmentation, une diminution ou un décalage des données d'adresse de dispositif dans le paquet de données.

6. Procédé de communication série à fil unique selon l'une quelconque de la revendication 2 à la revendication 5, dans lequel, lorsque le procédé de calcul pour modifier les données d'adresse de dispositif dans le paquet de données consiste à ajouter une valeur croissante aux données d'adresse de dispositif dans le paquet de données, les données d'adresse de dispositif dans le paquet de données transmis par le dispositif maître (Master) sont configurées comme une différence entre les données prédéfinies et un premier produit, et le premier produit est un produit d'une différence entre la position du dispositif esclave cible et 1 et la valeur croissante ; ou lorsque le procédé de calcul pour modifier les données d'adresse de dispositif dans le paquet de données consiste à diminuer les données d'adresse de dispositif dans le paquet de données d'une valeur décroissante, les données d'adresse de dispositif dans le paquet de données transmis par le dispositif maître (Master) sont configurées comme une somme des données prédéfinies et d'un premier produit, et le premier produit est un produit d'une différence entre la position du dispositif esclave cible et 1 et la valeur décroissante.

7. Procédé de communication série à fil unique selon l'une quelconque de la revendication 1 à la revendication 6, dans lequel un mode de codage des données d'adresse de dispositif est de type « LSB first ».

8. Procédé de communication série à fil unique selon l'une quelconque de la revendication 1 à la revendication 7, dans lequel les données prédéfinies dans le dispositif esclave sont définies comme une valeur fixe.

9. Procédé de communication série à fil unique selon la revendication 1, dans lequel, lorsque le système de communication série à fil unique est dans un mode de communication de deuxième type, le procédé de communication série à fil unique comprend en outre :
la comparaison des données d'adresse de dispositif dans le paquet de données reçu par le dispositif esclave actuel avec les données d'adresse de dispositif transmises par le dispositif maître (Master) ;
la détermination d'une position du dispositif esclave actuel en fonction d'une différence entre les données d'adresse de dispositif dans le paquet de données reçu par le dispositif esclave actuel et les données d'adresse de dispositif transmises par le dispositif maître (Master) ; et
la recherche de données de communication correspondantes dans le paquet de données transmis par le dispositif maître (Master) à mettre en œuvre par le dispositif esclave actuel en fonction de la position du dispositif esclave actuel, le paquet de données transmis par le dispositif maître (Master) comprenant une pluralité de données de communication correspondant à la pluralité de dispositifs esclaves (IC1~ICn).

10. Procédé de communication série à fil unique selon la revendication 9, dans lequel les données d'adresse de dispositif transmises par le dispositif maître (Master) sont une valeur fixe prédéfinie, et la valeur fixe est déterminée par des paramètres de la pluralité de dispositifs esclaves (IC1~ICn).

11. Système de communication série à fil unique comprenant un dispositif maître (Master) et une pluralité de dispositifs esclaves (IC1~ICn), dans lequel le dispositif maître (Master) et la pluralité de dispositifs esclaves (IC1~ICn) sont connectés séquentiellement par un fil unique pour former une liaison de communication, le système de communication série à fil unique comprenant :
à chaque communication, le dispositif maître (Master) étant adapté pour transmettre un paquet de données, et
chacun parmi une pluralité de dispositifs esclaves (IC1~ICn) étant adapté pour recevoir séquentiellement le paquet de données ;
un dispositif esclave actuel adapté pour recevoir le paquet de données et pour transmettre le paquet de données à un dispositif esclave suivant dans la liaison de communication, dans lequel chacun parmi la pluralité de dispositifs esclaves (IC1~ICn), lors de la réception du paquet de données, fait office de dispositif esclave actuel ;
avant que le paquet de données ne soit transmis au dispositif esclave suivant, le dispositif esclave actuel est adapté pour modifier des données d'adresse de dispositif dans le paquet de données ; et
le dispositif esclave actuel est adapté pour comparer les données d'adresse de dispositif dans le paquet de données reçu par le dispositif esclave actuel avec des données prédéfinies (m) ou les données d'adresse de dispositif transmises dans le paquet de données par le dispositif maître (Master) afin de trouver au moins un dispositif esclave cible dans la communication.

12. Système de communication série à fil unique selon la revendication 11, dans lequel un procédé de calcul pour modifier les données d'adresse de dispositif dans le paquet de données comprend au moins l'un parmi une augmentation, une diminution ou un décalage des données d'adresse de dispositif dans le paquet de données.

13. Système de communication série à fil unique selon la revendication 11 ou la revendication 12, dans lequel, lorsque le système de communication série à fil unique est dans un mode de communication de premier type, le dispositif esclave actuel est adapté pour comparer les données d'adresse de dispositif dans le paquet de données reçu par le dispositif esclave actuel avec les données prédéfinies (m), et lorsque les données d'adresse de dispositif dans le paquet de données reçu par le dispositif esclave actuel sont cohérentes avec les données prédéfinies (m), le dispositif esclave actuel est considéré comme le dispositif esclave cible dans la communication et met en œuvre une opération correspondante en fonction de données de communication dans le paquet de données.

14. Système de communication série à fil unique selon la revendication 13, dans lequel les données d'adresse de dispositif dans le paquet de données transmis par le dispositif maître (Master) sont déterminées par les données prédéfinies (m), une position du dispositif esclave cible et un procédé de calcul pour modifier les données d'adresse de dispositif dans le paquet de données, et la position du dispositif esclave cible correspond à des temps de transmission du paquet de données transmis par le dispositif maître (Master) vers le dispositif esclave cible.

15. Système de communication série à fil unique selon la revendication 13 ou la revendication 14, dans lequel, lorsque le procédé de calcul pour modifier les données d'adresse de dispositif dans le paquet de données consiste à ajouter une valeur croissante aux données d'adresse de dispositif dans le paquet de données, les données d'adresse de dispositif dans le paquet de données transmis par le dispositif maître (Master) sont configurées comme une différence entre les données prédéfinies (m) et un premier produit, et le premier produit est un produit d'une différence entre la position du dispositif esclave cible et 1 et la valeur croissante ; ou lorsque le procédé de calcul pour modifier les données d'adresse de dispositif dans le paquet de données consiste à diminuer les données d'adresse de dispositif dans le paquet de données d'une valeur décroissante, les données d'adresse de dispositif dans le paquet de données transmis par le dispositif maître (Master) sont configurées comme une somme des données prédéfinies et d'un premier produit, et le premier produit est un produit d'une différence entre la position du dispositif esclave cible et 1 et la valeur décroissante.

16. Système de communication série à fil unique selon l'une quelconque de la revendication 13 à la revendication 15, dans lequel les données prédéfinies (m) dans le dispositif esclave sont définies comme une valeur fixe.

17. Système de communication série à fil unique selon la revendication 11 ou la revendication 12, dans lequel, lorsque le système de communication série à fil unique est dans un mode de communication de deuxième type, le dispositif esclave actuel est adapté pour comparer les données d'adresse de dispositif dans le paquet de données reçu par le dispositif esclave actuel avec les données d'adresse de dispositif transmises par le dispositif maître (Master), et pour déterminer une position du dispositif esclave actuel en fonction d'une différence entre les données d'adresse de dispositif dans le paquet de données reçu par le dispositif esclave actuel et les données d'adresse de dispositif transmises par le dispositif maître (Master), et pour rechercher des données de communication correspondantes dans le paquet de données transmis par le dispositif maître (Master) à mettre en œuvre en fonction de la position du dispositif esclave actuel, dans lequel le paquet de données transmis par le dispositif maître (Master) comprend une pluralité de données de communication correspondant à la pluralité de dispositifs esclaves (IC1~ICn).

18. Système de communication série à fil unique selon la revendication 17, dans lequel les données d'adresse de dispositif transmises par le dispositif maître (Master) sont une valeur fixe prédéfinie, et la valeur fixe est déterminée par des paramètres de la pluralité de dispositifs esclaves (IC1~ICn).

19. Système de communication série à fil unique selon l'une quelconque de la revendication 11 à la revendication 18, dans lequel un mode de codage des données d'adresse de dispositif est « LSB first ».

20. Système de communication série à fil unique selon l'une quelconque de la revendication 11 à la revendication 19, dans lequel la pluralité de dispositifs esclaves (IC1~ICn) dans la liaison de communication comprend un premier dispositif esclave (IC1) à un n-ième dispositif esclave (ICn), n est égal à et supérieur à deux, une borne de sortie de données du dispositif maître (Master) est connectée à une borne de réception de données du premier dispositif esclave (IC1), des bornes de réception de données d'un deuxième dispositif esclave (IC2) au n-ième dispositif esclave (ICn) sont respectivement connectées à des bornes de sortie de données du premier dispositif esclave (IC1) à un (n-1)-ième dispositif esclave (ICn-1) dans la liaison de communication, et le premier dispositif esclave (IC1) au n-ième dispositif esclave (ICn) sont le même appareil, une borne de sortie de données du n-ième dispositif esclave (ICn) est connectée à une borne d'entrée de données du dispositif maître (Master) ou une borne de sortie de données du n-ième dispositif esclave (ICn) n'est pas connectée à une borne d'entrée de données du dispositif maître (Master).
